# EUROPEAN PATENT SPECIFICATION

(11) **EP 2 217 083 B1**
(45) Date of publication and mention of the grant of the patent: **05.09.2018**
(21) Application number: 08840240.9
(22) Date of filing: 16.10.2008
(51) Int. Cl.: A23F 3/14

(54) **BEVERAGE COMPOSITIONS**
GETRÄNKZUSAMMENSETZUNGEN
COMPOSITIONS DE BOISSON

(30) Priority: 16.10.2007 US 999243 P
(43) Date of publication of application: 18.08.2010
(60) Divisional application: 13172175.5
(73) Proprietor: Ganeden Biotech, Inc., Mayfield Heights, OH 44124 (US)
(72) Inventor: FARMER, Sean, Miami Beach FL 33140 (US)
(74) Representative: Ladendorf, Oliver
(86) International application number: PCT/US2008/011812
(87) International publication number: WO 2009/051753

(56) References cited:
- EP-A- 1 020 123
- EP-A- 1 344 458
- EP-A- 1 810 579
- WO-A-2005/019417
- WO-A-2005/055934
- WO-A-2005/117926
- WO-A-2006/090729
- WO-A-2007/058027
- WO-A-2008/112296
- CN-A- 1 507 812
- JP-A- 11 169 145
- JP-A- 2000 093 162
- TW-B- 228 974
- US-A1- 2004 175 459
- US-A1- 2007 059 400

## Description

### FIELD OF THE INVENTION

The present application relates to beverage compositions comprising lactic acid-producing bacteria.

### BACKGROUND OF THE INVENTION

The gastrointestinal microflora plays a number of vital roles in maintaining gastrointestinal tract function and overall physiological health. The growth and metabolism of the many individual bacterial species inhabiting the gastrointestinal tract depend primarily upon the substrates available to them, most of which are derived from the diet. (*See e.g.,* Gibson G.R. et al., 1995. Gastroenterology 106: 975-982; Christl, S.U. et al., 1992. Gut 33: 1234-1238.) Probiotic organisms are non-pathogenic, non-toxigenic, retain viability during storage, and survive passage through the stomach and small intestine. Since probiotics do not generally permanently colonize the host, they need to be ingested regularly for any health promoting properties to persist. These findings have led to attempts to modify the composition and metabolic activities of the bacterial community through diet, primarily with probiotics, which are live microbial food supplements. Document WO 2005/117926 describes an agent for intestinal bacterial floral amelioration comprising a tree bark extract as an active ingredient; and a food comprising a tree bark extract and at least one member selected from among oligosaccharide, *Bacillus bifidus* and *Lactobacillus.* The document further describes that the intestinal bacterial flora improving agent increases useful bacteria such as *Bifidobacterium daeresense* and *Bacillus coaeulans.* Document WO 2005/055934 describes methods for the dietary management of irritable bowel syndrome and carbohydrate malabsorption by administering a composition containing a *Bacillus coagulans* bacterium.

### SUMMARY OF THE INVENTION

The invention is directed to the surprising discovery that lactic acid-producing bacteria, particularly *Bacillus* species, remain viable and retain their beneficial probiotic properties in beverage compositions, such as those prepared at high temperatures (e.g., 80, 90, 100, 120, or 150°C) in boiling water. The invention describes spore-containing beverage compositions. Specifically, the invention provides a beverage composition for the preparation of tea that comprises viable *Bacillus coagulans* spores, wherein preparing said tea comprises combining said composition with boiling water, said composition comprising isolated *Bacillus coagulans* spores and dehydrated vegetative matter used for brewing tea, wherein said dehydrated vegetative matter is obtained from *Camellia sinensis,* or from ginger tea, hibiscus tea, rooibos tea, peppermint tea, or stevia tea and wherein
(a) the vegetative matter is coated or sprayed with isolated *Bacillus coagulans* spores;
(b) the composition is contained in a tea bag, and isolated *Bacillus coagulans* spores in the form of a spray-dried powder are included on the surface of the tea bag; or
(c) the composition is contained in a tea bag, and isolated *Bacillus coagulans* spores in the form of a spray-dried powder are included in the tea bag.

In one aspect, the dehydrated vegetative matter is processed leaves, buds, roots and/or twigs. Preferably, the beverage composition is green tea, black tea, oolong tea, yellow tea, or white tea. The invention provides instant tea and brewable tea beverage compositions. In one aspect, the beverage composition is decaffeinated tea.

In one embodiment of the composition of the invention the vegetative matter is coated or sprayed with isolated *Bacillus coagulans* spores.

In a further embodiment the composition according to the invention is contained in a tea bag.

In a further embodiment, the composition according to the invention is contained in a tea bag, and isolated *Bacillus coagulans* spores in the form of a spray-dried powder are included on the surface of the tea bag.

In a further embodiment, the composition according to the invention is contained in a tea bag, and isolated *Bacillus coagulans* spores in the form of a spray-dried powder are included in the tea bag.

In a further embodiment said powder comprises spray-dried powder.
Bacterial species include *Bacillus coagulans* hammer strain Accession No. ATCC 31284, or *Bacillus coagulans* hammer strain derivative GBI-20, ATCC Designation Number PTA-6085; GBI-30, ATCC Designation Number PTA-6086; or GBI-40, ATCC Designation Number PTA-6087; see U.S. Patent No. 6,849,256 to Farmer).

The invention further provides a method for preparing a probiotic beverage composition, comprising combining a beverage composition as defined herein above with boiling water, wherein the beverage composition is contained in a tea bag.

In a specific embodiment of the invention, the method comprises steeping the tea for 4 minutes.

In a further specific embodiment of the method of the invention, said beverage composition comprises green tea.

In yet another specific embodiment of the method of the invention, at least 50% of *Bacillus coagulans* spores in the probiotic beverage composition germinate after preparation of the probiotic beverage composition.

The *Bacillus coagulans* Hammer strains of the invention are non-pathogenic and generally regarded as safe for use in human nutrition (*i.e.,* GRAS classification) by the U.S. Federal Drug Administration (FDA) and the U.S. Department of Agriculture (USDA), and by those skilled in the art. Furthermore, the *Bacillus coagulans* Hammer strains of the invention germinate at or below human body temperature, rendering them useful as probiotics. Many *Bacillus coagulans* strains outside the Hammer group have mostly industrial applications, little or no nutritional benefit, and environmental contaminants that have not been evaluated for safety. Moreover, many other non-Hammer strains of *Bacillus coagulans* grow optimally at temperatures that exceed human body temperature and, thus, do not germinate efficiently in the human body. Such strains are less or not suitable as probiotics for human consumption.

### BRIEF DESCRIPTION OF THE DRAWINGS

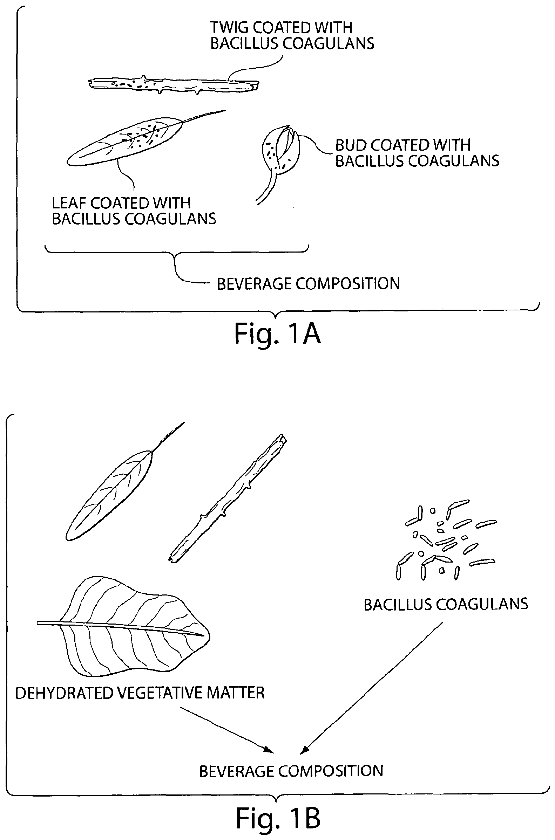

Figure 1A is a drawing demonstrating that tea leaves or other dehydrated vegetative matter is coated or sprayed with spores or freeze-dried *Bacillus coagulans* vegetative cells.
Figure 1B is a drawing illustrating that the *Bacillus* bacterium is added to the beverage composition separate from or along with the dehydrated vegetative matter or non-bacterial ingredient.

### DETAILED DESCRIPTION OF THE INVENTION

The present invention is directed to the discovery that non-pathogenic lactic acid-producing bacteria (*i.e.,* "lactic acid bacteria"), such as the exemplary *Bacillus coagulans,* remain viable and retain their beneficial probiotic properties in beverage compositions, such as those prepared in boiling water.

### Probiotic Lactic Acid-Producing Bacteria

A probiotic lactic acid-producing bacteria of the species *Bacillus coagulans* suitable for use in the methods and compositions of the invention as defined for use in the present invention produces acid and is non-pathogenic. There are many suitable *Bacillus coagulans* bacteria identified as described herein, although the invention is not limited to currently known bacterial species insofar as the purposes and objectives of the bacteria is described. The property of acid production is important to the effectiveness of the probiotic lactic acid-producing bacteria of this invention.

The invention provides using a spore-forming *Bacillus* species, namely *B. coagulans.* Preferably, the spore-forming *Bacillus* species of the invention is *B. coagulans* Hammer.

Exemplary methods and compositions are described herein using *Bacillus coagulans* as a probiotic. Purified and/or isolated *Bacillus coagulans* is particularly useful as a probiotic in beverage compositions. Probiotic *B. coagulans* is non-pathogenic and is generally regarded as safe (*i.e.,* GRAS classification) by the U.S. Federal Drug Administration (FDA) and the U.S. Department of Agriculture (USDA), and by those skilled in the art.

*Bacillus coagulans* is a non-pathogenic gram positive spore-forming bacteria that produces L(+) lactic acid (dextrorotatory) in fermentation conditions. It has been isolated from natural sources, such as heat-treated soil samples inoculated into nutrient medium (Bergey's Manual off Systemic Bacteriology, Vol. 2, Sneath, P.H.A., et al., eds., Williams & Wilkins, Baltimore, MD, 1986). Purified *B. coagulans* strains have served as a source of enzymes including endonucleases (*e.g*., U.S. Patent No. 5,200,336); amylase (U.S. Patent No. 4,980,180); lactase (U.S. Patent No. 4,323,651); and cyclo-malto-dextrin glucano-transferase (U.S. Patent No. 5,102,800). *B. coagulans* has been used to produce lactic acid (U.S. Patent No. 5,079,164). A strain of *B. coagulans* (referred to as *L. sporogenes;* Sakaguti & Nakayama (ATCC 31284)) has been combined with other lactic acid producing bacteria and *B. natto* to produce a fermented food product from steamed soybeans (U.S. Patent No. 4,110,477).

Bacterial species include *Bacillus coagulans, e.g., Bacillus coagulans* hammer, preferably *Bacillus coagulans* hammer strain Accession No. ATCC 31284, or one or more strains derived from *Bacillus coagulans* hammer strain Accession No. ATCC 31284 (*e.g.,* ATCC Numbers: GBI-20, ATCC Designation Number PTA-6085; GBI-30, ATCC Designation Number PTA-6086; and GBI-40, ATCC Designation Number PTA-6087; see U.S. Patent No. 6,849,256 to Farmer).

*Bacillus coagulans* was previously mis-characterized as a *Lactobacillus* and labeled as *Lactobacillus sporogenes* (See Nakamura et al. 1988. Int. J. Syst. Bacteriol. 38: 63-73). However, initial classification was incorrect because *Bacillus coagulans* produces spores and excretes L(+)-lactic acid through metabolism. Both of these characteristics provide key features to the utility of *Bacillus coagulans.* These developmental and metabolic aspects required that the bacterium be classified as a lactic acid *Bacillus.* In addition, it is not generally appreciated that classic *Lactobacillus* species are unsuitable for colonization of the gut due to their instability in the harsh (*i.e*., acidic) pH environment of the bile, particularly human bile. By contrast, *Bacillus coagulans* is able to survive and colonize the gastrointestinal tract in the bile environment and even grown in this low pH range.

### Probiotic Activity of Bacillus coagulans

It is well-documented clinically that many species of bacterial, mycotic and yeast pathogens possess the ability to cause a variety of gastrointestinal disorders including, but not limited to: disruption of normal gastrointestinal biochemical function, necrosis of gastrointestinal tissues, and disruption of the bioabsorption of nutrients, and like conditions. The probiotic microorganism-containing compositions described herein inhibit these pathogens. Thus, the compositions are useful in the prophylactic or therapeutic treatment of conditions associated with infection by these aforementioned pathogens.

In one aspect, a *Bacillus coagulans* strain is included in a beverage composition for the preparation of tea that comprises viable *Bacillus coagulans* spores, wherein preparing said tea comprises combining said composition with boiling water, said composition comprising isolated *Bacillus coagulans* spores and dehydrated vegetative matter used for brewing tea, wherein said dehydrated vegetative matter is obtained from *Camellia sinensis,* or from ginger tea, hibiscus tea, rooibos tea, peppermint tea, or stevia tea and wherein (a) the vegetative matter is coated or sprayed with isolated *Bacillus coagulans* spores; (b) the composition is contained in a tea bag, and isolated *Bacillus coagulans* spores in the form of a spray-dried powder are included on the surface of the tea bag; or (c) the composition is contained in a tea bag, and isolated *Bacillus coagulans* spores in the form of a spray-dried powder are included in the tea bag..

Because *Bacillus* spores are heat and pressure-resistant and can be stored as a dry powder, they are particularly useful for formulation into and manufacture of products such as the various beverage compositions described herein. A *Bacillus* species is well suited for the present invention, particularly species having the ability to form spores which are relatively resistant to heat and other conditions, making them ideal for long storage (shelf- life) in product formulations.

The *Bacillus coagulans* in the described compositions survives storage (shelf-life) from about 12 days to about 5 years; from about 1 month to about 18 months; from about 3 months to about 1 year; or from about 6 months to about 9 months. For example, at least 50, 65, 75, 90, 95, or 99% of the spores germinate following hot beverage preparation after prolonged (e.g., 2 year) storage period.

### Anti-microbial Probiotic Activity

The ability of *Bacillus coagulans* to inhibit various bacterial pathogens was quantitatively ascertained by use of an *in vitro* assay. This assay is part of a standardized bacterial pathogen screen (developed by the U.S. Food and Drug Administration(FDA)) and is commercially available on solid support disks (DIFCO® BACTROL® Antibiotic Disks). To perform the assay, potato-dextrose plates (DIFCO®) were initially prepared using standard procedures. The plates were then individually inoculated with the bacteria (approximately 1.5x10⁶ CFU) to be tested so as to form a confluent bacterial bed.

Inhibition of microorganisms (*e.g.* gastrointestinal pathogens) by *Bacillus coagulans* was subsequently ascertained by placing approximately 1.8 x 10⁶ CFU of *Bacillus coagulans* in 10 µl of broth or buffer, directly in the center of the potato-dextrose plate with one test locus being approximately 8 mm in diameter per plate. A minimum of three test loci were used for each assay. The negative control consisted of a 10 µl volume of a sterile saline solution, whereas the positive control consisted of a 1 µl volume of glutaraldehyde. The plates were then incubated for approximately about 18 hr at 30°C, at which time the zones of inhibition were measured. As designated herein, "excellent inhibition" means the zone was 10 mm or greater in diameter; and "good inhibition" means the zone was greater than 2 mm in diameter but less than 10 mm in diameter.

As expected, no "inhibition" was seen with the negative, saline control, and excellent "inhibition" (approximately 16.2 mm diameter; average of three tests) was seen with the positive, glutaraldehyde control. For the enteric microorganisms tested, the following inhibition by *Bacillus coagulans* was found: (*i*) *Clostridium* species - excellent inhibition; (*ii*) *Escherichia coli* - excellent inhibition; (*iii*) *Clostridium* species - excellent inhibition, where the zone of inhibition was consistently greater than 15 mm in diameter. Similarly, excellent inhibition was also seen for the opportunistic pathogens *Pseudornonas aeruginosa,* and *Staphylococcus aureus.* Pathogenic enteric bacteria which were inhibited by *Bacillus coagulans* activity include, but are not limited to: *Staphylococcus aureus; Staphylococcus epidermidis; Streptococcus pyogenes; Pseudomonas aeruginosa*; *Escherichia coli* (enterohemorragic species); numerous *Clostridium* species (*e.g., Clostridium perfingens, Clostridium botulinum, Clostridium tributrycum, Clostridium sporogenes,* and the like); *Gardnereia vaginails; Proponbacterium aenes*; *Aeromonas hydrophia*; *Aspergillus* species; *Proteus* species; and *Klebsiella* species.

### Probiotic Beverage Compositions

The invention is directed to the surprising discovery that lactic acid-producing bacteria, i.e. *Bacillus coagulans,* remain viable and retain their beneficial probiotic properties in beverages compositions, such as those prepared in boiling water. The beverages are prepared by combining dry matter and a liquid, *e.g*., water. In one embodiment boiling water (about 100°C) is added to a combination of tea as defined herein that comprises viable *Bacillus coagulans* spores in a tea bag and is steeped for about four minutes.

The spores are formulated in a variety of compositions suited for use in a beverage composition. The bacterium may be present as at least 90% spores, *e.g.,* 95%, 98%, or 99% spores. Tea is a beverage made by steeping dehydrated vegetative matter such as processed leaves, buds, roots or twigs of the tea bush, *Camellia sinensis,* in hot water for a few minutes. The invention provides a dehydrated tea base, *e.g*., black tea, oolong tea, green tea, yellow tea, and white tea and a *Bacillus coagulans.* In one aspect, the tea is decaffeinated tea.

Also encompassed by the invention are blends of tea. Many blends of tea are prepared by adding other plants to a tea (black, oolong, green, yellow or white tea); for example, the popular Earl Grey tea is black tea with bergamot, while Jasmine tea is Chinese tea with Jasmine.

The invention also provides herbal "tea" beverage compositions wherein dehydrated vegetative matter is obtained from ginger tea, hibiscus tea, rooibos tea, peppermint tea, or stevia tea. An herb is characterized as a small, seed bearing plant with fleshy, rather than woody, parts (from which we get the term "herbaceous"). In addition to herbaceous perennials, herbs include trees, shrubs, annuals, vines, and more primitive plants, such as ferns, mosses, algae, lichens, and fungi. They [herbs] are valued for their flavor, fragrance, medicinal and healthful qualities, economic and industrial uses, pesticidal properties, and coloring materials (dyes). Herbal "tea" can be made with fresh or dried flowers, fruit, leaves, seeds or roots, generally by pouring boiling water over the plant parts and letting them steep for a few minutes. Suitable herbal teas include Ginger root tea, Hibiscus tea (often blended with rose hip), Mint tea, Rooibos (Red Bush or red) tea, or Stevia tea.

The invention also provides compositions comprising isolated *Bacillus coagulans* as defined above and one or more non-bacterial ingredients in a tea bag. In one aspect, the non-bacterial ingredients comprise dehydrated vegetative matter obtained from *Camellia sinensis* as defined above. Optionally, the dehydrated vegetative matter is processed leaves, buds, roots, and/or twigs.

Also provided by the invention are tea bags. Suitable tea bags include those of a porous silk, paper, cotton, or nylon bag with tea inside that is used for brewing tea. The tea bag consists of two parts, the tea and the bag. The tea remains inside the bag as the tea is brewed, making it easier to dispose of. Preferably, *Bacillus coagulans* bacteria in the form of a spray-dried powder is included in or on the surface of the tea bag along with the dehydrated vegetative matter.

In one aspect, the *Bacillus* bacterium is applied directly to the dehydrated vegetative matter or non-bacterial ingredient, e.g. tea leaves or other dehydrated vegetative matter is coated or sprayed with spores (Figure 1A).

The *Bacillus* and/or *Bacillus coagulans* isolated active agent is applied using any of a variety of known methods including, for example, applying a powder, spray-drying the probiotic onto the tea bag or soaking the tea bag in a solution containing the probiotic. Optionally, the *Bacillus* bacterium is applied prior to making the tea bag. Alternatively, the *Bacillus* bacterium is applied during or after the tea bag has been made. Any of a variety of methods for placing the bacterial composition into a beverage composition can be used. However, preferred methods include a "spray-dry" method in which the tea bag are exposed in a low humidity chamber to an atomized mix containing a liquid composition, where the chamber is subsequently exposed to approximately 80-110°F to dry the liquid, thereby impregnating the material of the tea bag with the components of the composition.

A typical concentration is from approximately 1x10⁷ to 1x10¹² CFU; 1x10⁸ to 1x10¹¹ CFU; or 1x10⁹ to 1x10¹⁰ CFU of spores/in² of external surface of tea bag. Following drying, the tea bag is ready for immediate use or for storage in a sterile package.

The active ingredients (*i.e.,* live bacteria or extracellular components), comprise between about 0.01% to about 10%; 0.01% to about 1%; or about 0.05% to about 0.1% by weight of the beverage composition. Optionally, the isolated *Bacillus coagulans* comprise about 1 mg to about 10 g; about 10 mg to about 1 g; or about 25 mg to about 75 mg by weight of the beverage composition. Most preferably, the amount of *Bacillus coagulans* bacteria is about 10⁹ colony forming units (CFU) of bacteria per tea bag (about 50 mg of bacteria per tea bag in about 2-3 grams of tea).

In one aspect, the amount of bacteria is about 10⁴ to 10¹⁴ colony forming units (CFU) of bacteria per gram of beverage composition (*i.e*., bacterial spores), preferably 10⁵ to 10¹³ CFU/g. More preferably, the concentrations are 10⁸ to 10¹³ CFU/g; 10⁹ to 10¹² CFU/g; or 10¹⁰ to 10¹¹ CFU/g. In one aspect, the amount of bacteria is about 1 x 10⁶ CFU per beverage composition. The actual amount in a composition will vary depending upon the amounts of composition to be dispersed into the beverage composition and upon routes of dispersal.

In one aspect, the invention provides for storing the tea bag in a sterile package at room temperature prior to consumption. Alternatively, the tea bag is used immediately.

In another aspect, the beverage composition comprises at least 85%, at least 90%, at least 95% or 100% isolated *Bacillus coagulans* spores.

By way of example, and not of limitation, *Bacillus coagulans* spores may be incorporated into any type of dry or lyophilized product which is dissolved or mixed with hot water, so long as the temperature of the *Bacillus coagulans* spore-containing mixture is raised to the required heat-shock temperature (*i.e*., 80°C for 5 minutes) necessary for germination of the spores.

### Example 1: Preparation of Bacillus coagulans cultures

*Bacillus coagulans Hammer* bacteria (ATCC Accession No. 31284) was inoculated and grown to a cell density of about 10⁸ to 10⁹ cells/ml in nutrient broth containing 5 g Peptone, 3 g Meat extract, 10-30 mg MnSO₄, and 1,000 ml distilled water, adjusted to pH 7.0, using a standard airlift fermentation vessel at 30°C. The range of MnSO₄ acceptable for sporulation is 1 mg/l to 1 g/l. The vegetative cells can actively reproduce up to 45°C, and the spores are stable up to 90°C. After fermentation, the *B. coagulans* bacterial cells or spores are collected using standard methods (e.g., filtration, centrifugation) and the collected cells and spores can be lyophilized, spray-dried, air-dried or frozen. As described herein, the supernatant from the cell culture is collected and used as an extracellular agent secreted by *B. coagulans.*

A typical yield from the above culture is in the range of about 10⁹ to 10¹⁰ viable spores and more typically about 100 to 150 billion cells/spores per gram before drying. Spores maintain at least 90% viability after drying when stored at room temperature for up to ten years, and thus the effective shelf life of a composition containing *B. coagulans* Hammer spores at room temperature is about 10 years.

### Example 2: Preparation of Bacillus coagulans spores

A culture of dried *B. coagulans* spores was prepared as follows. Ten million spores were inoculated into a one liter culture containing 24 g potato dextrose broth, 10 g of enzymic-digest of poultry and fish tissue, 5 g of FOS and 10 g MnSO4. The culture was maintained for 72 hours under a high oxygen environment at 37°C to produce culture having about 150 billion cells per gram of culture. Thereafter, the culture was filtered to remove culture medium liquid, and the bacterial pellet was resuspended in water and freeze-dried. The freeze-dried powder is then ground to a fine powder using standard good manufacturing practice (GMP).

### Example 3: Bacillus coagulans spore survival

This study was performed in order to determine the survivability rate of *Bacillus coagulans* spores as they pass through the stomach. Samples of *Bacillus coagulans* spores were subjected to a simulated gastric environment for varying lengths of time in order to attain their survivability rate. First, a homogeneous sample of raw material *Bacillus coagulans* of at least 12 grams was prepared. Saline solution at pH 1 was prepared using 3N HCl (150 mls each into six 250 ml media bottles) and sterilized. Additional saline solutions with pH 2 and 3 were prepared similarly, resulting in 6 sterile 250 ml bottles, each containing 150 ml pH adjusted saline. Six sterile 250 ml media bottles each containing 150 ml normal saline solution were prepared and sterilized. Phosphate buffer (∼400 ml) was prepared at pH 7.2. Test tubes (24) were prepared and sterilized, each containing 9 ml of phosphate buffer pH 7.2. Test tubes (120) were prepared, each containing 9 ml of normal saline. GYE agar medium was prepared and sterilized and cooled to 45°C in a water bath. Samples (24) of raw material were weighed, each ∼ 500 milligrams (equivalent to 10 billion spores). The samples were added to media bottles at 37°C and incubated half for 20 minutes the other half for 120 minutes. After 20 and 120 minutes incubation, respectively, the samples were mixed to uniformity and pipet 1 ml into 9 ml of sterile phosphate buffer pH 7.2. After all 12 samples from each time point were placed into test tubes containing sterile phosphate buffer, serial dilutions were made until 6 tubes had been used for each sample. The final dilution for the final two test tubes were 3 x 10⁷ and 3 x 10⁸, which gave a count of roughly 300 and 30 CFU, respectively. The final 2 test tubes from each sample were placed into 70°C water bath for 30 minutes. After 30 minutes, they were cooled immediately to 45°C. Three sterile petri plates per tube were set out. 1.0 ml from the heat-treated tube was added into each petri plate, then 15 ml of sterile molten GYE Agar medium (at 45°C) was poured into each of the petri plates and mixed thoroughly. When solidified, the plates were incubated in an inverted position for 48 hours at 40°C. The individual colonies were counted. Results were expressed as CFU per gram as shown in the table below. 1.0E+10 = 1.0 x 10¹⁰

**Table 1.**

| Sample | 20 Minutes Incubation Spore Count, CFU/gram | 120 Minutes Incubation Spore Count, CFU/gram |
|---|---|---|
| Normal Saline - A | 1.90E+10 | 1.88E+10 |
| Normal Saline - B | 2.12E+10 | 2.00E+10 |
| Normal Saline - C | 1.64E+10 | 2.06E+10 |
| Average | 1.89E+10 | 1.98E+10 |
| | | |
| Saline pH 1.0 - D | 2.08E+09 | 5.98E+07 |
| Saline pH 1.0 - E | 1.47E+09 | 0.00E+00 |
| Saline pH 1.0 - F | 3.59E+09 | 0.00E+00 |
| Average | 2.38E+09 | 1.99E+07 |
| | | |
| Saline pH 2.0 - G | 3.63E+09 | 3.46E+09 |
| Saline pH 2.0 - H | 4.47E+09 | 2.48E+09 |
| Saline pH 2.0 - I | 3.58E+09 | 2.82E+09 |
| Average | 3.89E+09 | 2.92E+09 |
| | | |
| Saline pH 3.0 - J | 1.65E+10 | 1.13E+10 |
| Saline pH 3.0 - K | 1.35E+10 | 1.11E+10 |
| Saline pH 3.0 - L | 1.80E+10 | 1.39E+10 |
| Average | 1.60E+10 | 1.21E+10 |

### Example 4: Bacillus coagulans spore shock survival test

The purpose of the following study was to determine the survivability rate of GBI-30 (*Bacillus coagulans*-30; BC³⁰) after steeping with tea for 5 minutes followed by subjection to a simulated gastric environment (*e.g*., pH 2.0) for 2 hours. Samples of GBI-30 were placed in boiling water along with a tea bag (Celestial Seasonings®- Authentic Green Tea), and steeped for 5 minutes. They were then subjected to a simulated gastric environment for 2 hours in order to determine their survivability rate. The results are detailed below.

One liter of saline solution (pH 2.0 using 3N HCl) and 150 ml of normal saline solution was prepared. Saline solution (90 mls; pH 2.0) was placed into each of six 250 ml media bottles and sterilized. About 100 ml phosphate buffer (pH 7.2) was prepared. Test tubes (3) containing 9 ml of phosphate buffer (pH 7.2) were prepared and sterilized. Nine test tubes containing 9 ml of normal saline were prepared and sterilized. Sterile GYE agar medium was prepared and cooled to 45°C in a water bath. Three samples of raw material (16 billion/gram), were weighed (each ∼ 62.5 milligrams; GBI-30).

Six samples were prepared as follows. Drinking water was boiled and 200 ml boiling water was poured into a 400 ml beaker which contained 1 teabag and ∼62.5 mg raw material (GBI-30). The teabag was steep for 5 minutes. The teabag was removed and the solution was mixed well and 10 ml was placed into 90 ml of saline solution (pH 2.0). The samples incubated for 2 hours at 37°C. The solution was then mixed to uniformity and 1 ml was placed into 9 ml of sterile phosphate buffer (pH 7.2). Three serial dilutions of 1 ml into 9 ml of sterile saline solution were prepared. The final count was about 5 x 10¹ (50 CFU). The final 3 test tubes from each sample were plated. The individual colonies were counted. The results of this experiment are listed in the chart below. These data indicate that *Bacillus coagulans* spores survive in the gastric environment after consumption of the beverage compositions described herein.

**Table 2.**

| 2 hrs @37°C | Spore Count, CFU Total | Survival Rate |
|---|---|---|
| 1 | 1.44E+08 | 13.0% |
| 2 | 1.84E+08 | 17.2% |
| 3 | 2.16E+08 | 20.9% |
| | 1.81E+08 | 17.0% |

In another set of experiments, tea bags containing GBI-30 were placed into boiling water and the tea was steeped for four minutes. Cell counts were performed. About 65% of the *Bacillus coagulans* bacteria survived. These data indicate that *Bacillus coagulans* spores retain viability in the beverage compositions described herein.

## Claims

1. A beverage composition for the preparation of tea that comprises viable *Bacillus coagulans* spores, wherein preparing said tea comprises combining said composition with boiling water, said composition comprising isolated *Bacillus coagulans* spores and dehydrated vegetative matter used for brewing tea, wherein said dehydrated vegetative matter is obtained from *Camellia sinensis,* or from ginger tea, hibiscus tea, rooibos tea, peppermint tea, or stevia tea and wherein
(a) the vegetative matter is coated or sprayed with isolated *Bacillus coagulans* spores;
(b) the composition is contained in a tea bag, and isolated *Bacillus coagulans* spores in the form of a lyophilized, spray-dried, air-dried or frozen powder are included on the surface of the tea bag; or
(c) the composition is contained in a tea bag, and isolated *Bacillus coagulans* spores in the form of a lyophilized, spray-dried, air-dried or frozen powder are included in the tea bag.

2. The composition of claim 1, wherein the vegetative matter is coated or sprayed with isolated *Bacillus coagulans* spores.

3. The composition of claim 1, wherein the composition is contained in a tea bag.

4. The composition of claim 3, wherein the composition is contained in a tea bag, and isolated *Bacillus coagulans* spores in the form of a lyophilized, spray-dried, air-dried or frozen powder are included on the surface of the tea bag.

5. The composition of claim 3, the composition is contained in a tea bag, and isolated *Bacillus coagulans* spores in the form of a lyophilized, spray-dried, air-dried or frozen powder are included in the tea bag.

6. The composition of any one of claims 1 to 5, wherein said powder comprises spray-dried powder.

7. The composition of any one of claims 1 to 6, wherein said dehydrated vegetative matter is selected from the group consisting of processed leaves, buds, roots and twigs.

8. The composition of claim 7, wherein said tea is green tea, black tea, oolong tea, yellow tea, or white tea.

9. The composition of claim 8, wherein said tea is green tea.

10. The composition of claim 8, wherein said tea is brewable tea, and wherein said beverage composition is optionally decaffeinated tea.

11. The composition of any one of claims 1 to 5 or 7 to 10, wherein said isolated *Bacillus coagulans* is *Bacillus coagulans* hammer strain Accession No. ATCC 31284, or wherein said isolated *Bacillus coagulans* is selected from the group consisting of GBI-30 strain (ATCC Designation Number PTA-6086), GBI-2.0 strain (ATCC Designation Number PTA-6085), and GBI-40 strain (ATCC Designation Number PTA-6087).

12. The composition of claim 11, wherein said isolated *Bacillus coagulans* is GBI-30 strain (ATCC Designation Number PTA-6086).

13. A method for preparing a probiotic beverage composition, comprising combining a beverage composition according to any one of claims 1 to 5 or 7 to 12 with boiling water, wherein the beverage composition is contained in a tea bag.

14. The method of claim 13, comprising steeping the tea for 4 minutes.

15. The method of claim 13, wherein said beverage composition comprises green tea.

16. The method of claim 13, wherein at least 50% of *Bacillus coagulans* spores in the probiotic beverage composition germinate after preparation of the probiotic beverage composition.

## Patentansprüche

1. Getränkezusammensetzung zur Herstellung von Tee, die lebensfähige Sporen von *Bacillus coagulans* umfasst, wobei die Herstellung des Tees das Kombinieren der Zusammensetzung mit kochendem Wasser umfasst, wobei die Zusammensetzung isolierte Sporen von *Bacillus coagulans* und dehydratisiertes vegetatives Material, das zum Brühen von Tee verwendet wird, umfasst, wobei das hydratisierte vegetative Material von *Camellia sinensis* oder von Ingwertee, Hibiskustee, Rooibostee, Pfefferminztee oder Steviatee erhalten wird, und wobei
(a) das vegetative Material mit isolierten Sporen von *Bacillus coagulans* beschichtet oder besprüht ist,
(b) die Zusammensetzung in einem Teebeutel enthalten ist und isolierte Sporen von *Bacillus coagulans* in der Form eines lyophilisierten, sprühgetrockneten, luftgetrockneten oder gefrorenen Pulvers auf der Oberfläche des Teebeutels enthalten sind, oder
(c) die Zusammensetzung in einem Teebeutel enthalten ist und isolierte Sporen von *Bacillus coagulans* in der Form eines lyophilisierten, sprühgetrockneten, luftgetrockneten oder gefrorenen Pulvers im Teebeutel enthalten sind.

2. Zusammensetzung gemäß Anspruch 1, wobei das vegetative Material beschichtet oder besprüht ist mit isolierten Sporen von *Bacillus coagulans.*

3. Zusammensetzung gemäß Anspruch 1, wobei die Zusammensetzung in einem Teebeutel enthalten ist.

4. Zusammensetzung gemäß Anspruch 3, wobei die Zusammensetzung in einem Teebeutel enthalten ist und isolierte Sporen von *Bacillus coagulans* in der Form eines lyophilisierten, sprühgetrockneten, luftgetrockneten oder gefrorenen Pulvers auf der Oberfläche des Teebeutels enthalten sind.

5. Zusammensetzung gemäß Anspruch 3, wobei die Zusammensetzung in einem Teebeutel enthalten ist und isolierte Sporen von *Bacillus coagulans* in der Form eines lyophilisierten, sprühgetrockneten, luftgetrockneten oder gefrorenen Pulvers im Teebeutel enthalten sind.

6. Zusammensetzung gemäß einem der Ansprüche 1 bis 5, wobei das Pulver ein sprühgetrocknetes Pulver umfasst.

7. Zusammensetzung gemäß einem der Ansprüche 1 bis 6, wobei das dehydratisierte vegetative Material ausgewählt ist aus der Gruppe, bestehend aus prozessierten Blättern, Knospen, Wurzeln und Zweigen.

8. Zusammensetzung gemäß Anspruch 7, wobei der Tee grüner Tee, schwarzer Tee, Oolongtee, gelber Tee oder weißer Tee ist.

9. Zusammensetzung gemäß Anspruch 8, wobei der Tee grüner Tee ist.

10. Zusammensetzung gemäß Anspruch 8, wobei der Tee brühbarer Tee ist, und wobei die Getränkezusammensetzung gegebenenfalls entkoffeinierter Tee ist.

11. Zusammensetzung gemäß einem der Ansprüche 1 bis 5 oder 7 bis 10, wobei das isolierte *Bacillus coagulans Bacillus coagulans* Hammerstamm, Zugangsnummer ATCC 31284 ist, oder wobei das isolierte *Bacillus coagulans* ausgewählt ist aus der Gruppe, bestehend aus GBI-30-Stamm (ATCC-Designationsnummer PTA-6086), GBI-20-Stamm (ATCC-Designationsnummer PTA-6085) und GBI-40-Stamm (ATCC-Designationsnummer PTA-6087).

12. Zusammensetzung gemäß Anspruch 11, wobei das isolierte Ba*cillus coagulans* ein GBI-30-Stamm (ATCC-Designationsnummer PTA-6086) ist.

13. Verfahren zur Herstellung einer probiotischen Getränkezusammensetzung, das das Kombinieren einer Getränkezusammensetzung gemäß einem der Ansprüche 1 bis 5 oder 7 bis 12 mit kochendem Wasser umfasst, wobei die Getränkezusammensetzung in einem Teebeutel enthalten ist.

14. Verfahren gemäß Anspruch 13, umfassend das Ziehen des Tees für 4 Minuten.

15. Verfahren gemäß Anspruch 13, wobei die Getränkezusammensetzung grünen Tee umfasst.

16. Verfahren gemäß Anspruch 13, wobei mindestens 50% der Sporen von *Bacillus coagulans* in der probiotischen Getränkezusammensetzung nach Herstellung der probiotischen Getränkezusammensetzung keimen.

## Revendications

1. Composition de boisson pour la préparation d'un thé qui comprend des spores viables de *Bacillus coagulans,* dans laquelle la préparation dudit thé comprend la combinaison de ladite composition avec de l'eau bouillante, ladite composition comprenant des spores isolées de *Bacillus coagulans* et une matière végétale déshydratée utilisée pour infuser le thé, dans laquelle ladite matière végétale déshydratée est obtenue à partir de *Camellia sinensis,* ou d'un thé au gingembre, d'un thé à l'hibiscus, d'un thé au rooibos, d'un thé à la menthe poivrée, ou d'un thé au stévia et dans laquelle
(a) la matière végétale est revêtue ou pulvérisée avec des spores isolées de *Bacillus coagulans* ;
(b) la composition est contenue dans un sachet de thé, et les spores isolées de *Bacillus coagulans* sous la forme d'une poudre lyophilisée, séchée par pulvérisation, séchée à l'air ou congelée sont incluses sur la surface du sachet de thé ; ou
(c) la composition est contenue dans un sachet de thé, et les spores isolées de *Bacillus coagulans* sous la forme d'une poudre lyophilisée, séchée par pulvérisation, séchée à l'air ou congelée sont incluses dans le sachet de thé.

2. Composition selon la revendication 1, dans laquelle la matière végétale est revêtue ou pulvérisée avec des spores isolées de *Bacillus coagulans.*

3. Composition selon la revendication 1, dans laquelle la composition est contenue dans un sachet de thé.

4. Composition selon la revendication 3, dans laquelle la composition est contenue dans un sachet de thé, et les spores isolées de *Bacillus coagulans* sous la forme d'une poudre lyophilisée, séchée par pulvérisation, séchée à l'air ou congelée sont incluses sur la surface du sachet de thé.

5. Composition selon la revendication 3, la composition est contenue dans un sachet de thé, et les spores isolées de *Bacillus coagulans* sous la forme d'une poudre lyophilisée, séchée par pulvérisation, séchée à l'air ou congelée sont incluses dans le sachet de thé.

6. Composition selon l'une quelconque des revendications 1 à 5, dans laquelle ladite poudre comprend une poudre séchée par pulvérisation.

7. Composition selon l'une quelconque des revendications 1 à 6, dans laquelle ladite matière végétale déshydratée est sélectionnée dans le groupe constitué des feuilles, bourgeons, racines et rameaux transformés.

8. Composition selon la revendication 7, dans laquelle ledit thé est un thé vert, un thé noir, un thé Oolong, un thé jaune, ou un thé blanc.

9. Composition selon la revendication 8, dans laquelle ledit thé est un thé vert.

10. Composition selon la revendication 8, dans laquelle ledit thé est un thé infusable, et dans laquelle ladite composition de boisson est un thé facultativement décaféiné.

11. Composition selon l'une quelconque des revendications 1 à 5 ou 7 à 10, dans laquelle ledit *Bacillus coagulans* isolé est *Bacillus coagulans* souche hammer numéro d'accès ATCC 31284, ou dans laquelle ledit *Bacillus coagulans* isolé est sélectionné dans le groupe constitué de la souche GBI-30 (numéro de désignation ATCC PTA-6086), de la souche GBI-20 (numéro de désignation ATCC PTA-6085), et de la souche GBI-40 (numéro de désignation ATCC PTA-6087).

12. Composition selon la revendication 11, dans laquelle ledit *Bacillus coagulans* isolé est la souche GBI-30 (numéro de désignation ATCC PTA-6086).

13. Procédé de préparation d'une composition de boisson probiotique, comprenant la combinaison d'une composition de boisson selon l'une quelconque des revendications 1 à 5 ou 7 à 12 avec de l'eau bouillante, dans lequel la composition de boisson est contenue dans un sachet de thé.

14. Procédé selon la revendication 13, comprenant le trempage du thé pendant 4 minutes.

15. Procédé selon la revendication 13, dans lequel ladite composition de boisson comprend un thé vert.

16. Procédé selon la revendication 13, dans lequel au moins 50 % des spores de *Bacillus coagulans* dans la composition de boisson probiotique germent après la préparation de la composition de boisson probiotique.
